# EUROPEAN PATENT SPECIFICATION

(11) **EP 3 426 957 B1**
(45) Date of publication and mention of the grant of the patent: **15.04.2020**
(21) Application number: 17719913.0
(22) Date of filing: 10.03.2017
(51) Int. Cl.: F16K 31/06, F02M 21/02

(54) **INJECTOR FOR A SYSTEM FOR FEEDING GAS FUEL TO AN INTERNAL COMBUSTION ENGINE**
INJEKTOR FÜR EIN SYSTEM ZUM ZUFÜHREN VON GASKRAFTSTOFF ZU EINER BRENNKRAFTMASCHINE
INJECTEUR POUR UN SYSTÈME D'ALIMENTATION DE CARBURANT À GAZ POUR UN MOTEUR À COMBUSTION INTERNE

(30) Priority: 11.03.2016 IT UA20161577
(43) Date of publication of application: 16.01.2019
(73) Proprietor: Matrix S.p.A., 10015 Ivrea (IT)
(72) Inventor: GAIARDO, Mario, 10015 Ivrea (IT)
(74) Representative: D'Angelo, Fabio
(86) International application number: PCT/IB2017/051425
(87) International publication number: WO 2017/153967

(56) References cited:
- EP-A2- 2 383 458
- WO-A1-2013/038384
- DE-A1- 19 749 542
- JP-U- H0 312 067

## Description

### TECHNICAL FIELD

The invention relates to an injector for a system for feeding gas fuel to an internal combustion engine, in particular of an automotive vehicle.

### BACKGROUND ART

Known gas fuel feeding systems basically comprise a tank for a fuel in the form of liquefied gas, a pressure reduction device, which is fluidically connected to the tank and is adapted to reduce the pressure of the fuel until it reaches the transition to the gaseous state, and one or more injectors, which are fluidically connected, on opposite sides thereof, to the pressure reduction device and to respective cylinders of the engine, so as to selective inject, according to predetermined time laws, the gas fuel into the cylinders.

More in detail, each injector comprises a hollow casing defining an inlet mouth, which is fluidically connected to the pressure reduction device, and one or more outlet mouths, which are fluidically connected to respective cylinders of the engine. The casing further houses, for the sole outlet mouth available or for each outlet mouth in case there are different outlet paths for the fuel, a relative anchor made of ferromagnetic material, which is movable, due to the action of a respective electromagnet controlled by a control unit, between a first closing operative configuration and a second opening operative configuration, in which it respectively prevents or allows the gas fuel present inside the casing from flowing or to flow through the outlet mouth and from being injected or to be injected, by means of a respective intake pipe, into a relative cylinder, as in JP H03 12067 U.

More in detail, the anchor comprises a shutter, which is adapted to selective strike against the relative outlet mouth.

When the anchor is arranged in the first closing operative configuration, the relative shutter is held by a spring so as to strike against the relative outlet mouth of the injector, in order to prevent the gas fuel from being supplied to the relative intake pipe and, subsequently, to the relative cylinder.

When the anchor is arranged in the second opening operative configuration, the relative shutter does not interfere with the relative outlet mouth, thus allowing the gas fuel to be supplied to the relative cylinder.

The electromagnet usually consists of a core made of magnetic material and of a coil wound on the core, which can be electrically powered in a selective manner.

An example of a known injector of the type described above is shown in US 7,857,283; in this case, the shutter carried by the relative anchor ends its movement towards the second opening operative configuration against a plate of non-magnetic material fulfilling both the aim of dampening the impact of the anchor on the core of the relative electromagnet, thus reducing the wear thereof, and of avoiding the gluing effect generated by the incomplete extinction of the magnetic field after the deactivation of the coil.

The contact of the two planar surfaces of the anchor and of the plate of non-magnetic material ends with the switching off of the electric control and the consequent closing of the shutter due to the elastic load applied by the sprig and to the pressure present inside the casing (self-closing effect).

The feeding of gas in internal combustion engines currently involves the use of two types of fuels:
- compressed natural gas, which, because of its own nature, has features that are substantially constant in the different production sites, even though in some cases it can have foreign components, such as oils and other fluids; and
- LPG, which, on the other hand, as it is a product deriving from oil refining, can have features that are highly variable depending on the place of production, with frequent presence of oils and other chemical components in the fluid state.

The presence of oils and other fluids can determine an adhesion effect between the surface of the anchor and the one of the plate of non-magnetic material, against which the former ends, in use, its opening stroke. A similar adhesion effect could also be generated between the anchor and the core, if the plate of non-magnetic material were not present.

In both cases, this adhesion can cause a delay in the times of movement of the anchor to the first closing operative configuration upon deactivation of the coil.

Given the variable features of gas fuels, this delay is inconstant and unforeseeable and it can cause an incorrect operation not only of the injectors, but also of the entire feeding system.

As a matter of fact, direct, sequential and phased feeding systems require injectors with very precise delivery times, characterized by extremely rapid opening and closing times, in the range of milliseconds or even less.

### DISCLOSURE OF INVENTION

The object of the invention is to provide an injector for a system for feeding gas fuel to an internal combustion engine, which is capable of overcoming, in a simple and economic fashion, the drawbacks affecting known injectors described above.

The aforesaid object is reached by the invention, as it relates to an injector for a system for feeding gas fuel to an internal combustion engine according to claim 1.

### BRIEF DESCRIPTION OF THE DRAWINGS

The invention will be best understood upon perusal of the following detailed description of a preferred embodiment, which is provided by mere way of non-limiting example, with reference to the accompanying drawings, in which:
- figure 1 shows, in a perspective view, a system for feeding gas fuel to an internal combustion engine comprising an injector according to the invention;
- figure 2 shows, in an exploded perspective view, the injector of figure 1;
- figure 3 is a cross-section, on a larger scale and along line III-III of figure 1, showing the injector according to the invention in a closing operative configuration;
- figure 4 is cross-section, similar to the one of figure 3, showing the injector in an opening operative configuration;
- figures 5 and 6 show, in two different perspective views on a larger scale, a detail of the injector according to the invention;
- figure 7 shows, in a perspective view, a possible variant of the detail of figures 5 and 6; and
- figure 8 shows, in an exploded perspective view, a further possible variant of the detail of figures 5 and 6.

### BEST MODE FOR CARRYING OUT THE INVENTION

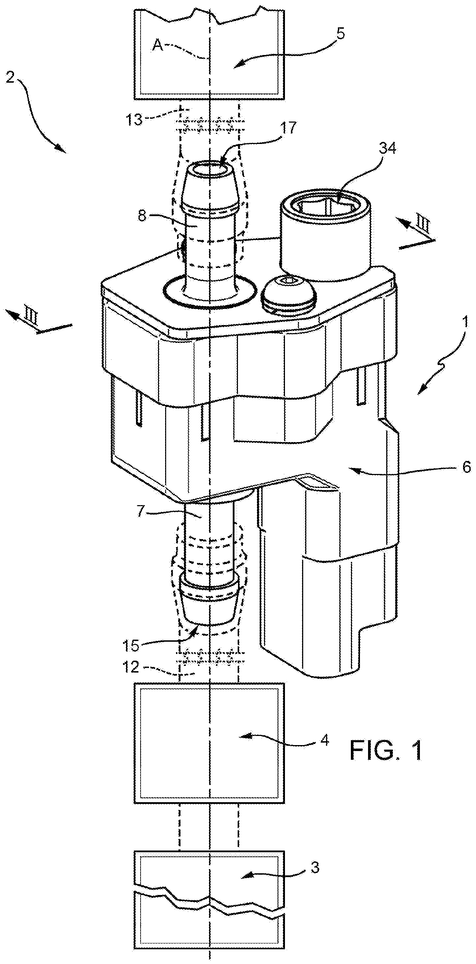

With reference to figures from 1 to 4, number 1 indicates, as a whole, an injector for a system 2 (schematically shown in figure 1) for feeding gas fuel to an internal combustion engine in an automotive vehicle.

In particular, the system 2 basically comprises a tank 3 containing the fuel in the form of liquefied gas, a pressure reduction device 4, which is fluidically connected to the tank 3 and is adapted to reduce the pressure of the fuel until it reaches the transition to the gaseous state, and one or more injectors 1 (a single one in the example shown), which are fed with the gas fuel flowing out of the pressure reduction device 4 and supply one or more corresponding cylinders 5 of the internal combustion engine.

The description below will make reference to a system 2 of the type shown in figure 1, namely comprising one single injector 1 and one single cylinder 5.

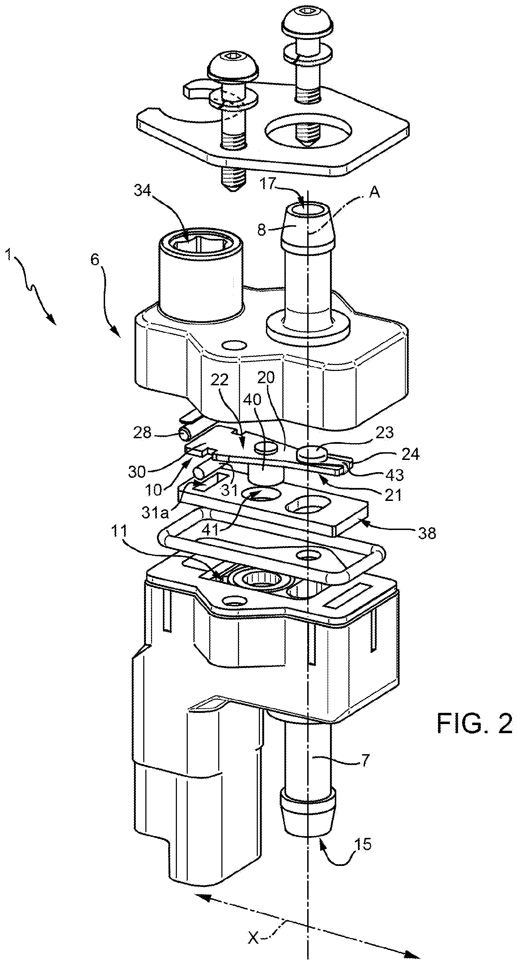

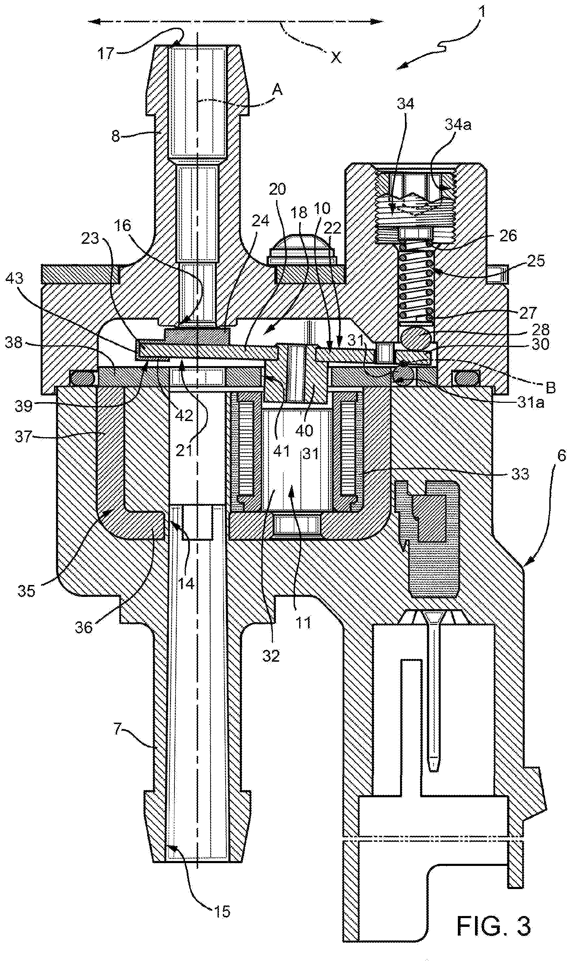

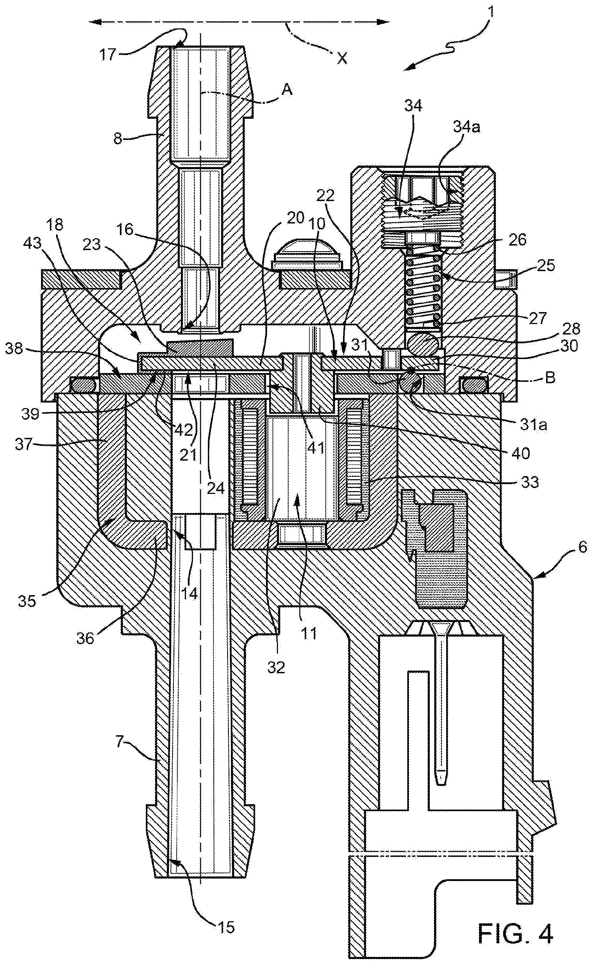

With reference to the figures from 1 to 4, the injector 1 basically comprises:
- a hollow casing 6, preferably made of a plastic material, which is provided with an inlet mouth 7 and with an outlet mouth, which are fluidically connected to the pressure reduction device 4 and to the cylinder 5 of the engine, respectively;
- an anchor 10 (figures 2, 3 and 4), which is housed inside the casing 6 between the inlet mouth 7 and the outlet mouth 8 and is selectively available in a first closing operative configuration (figure 3) or in a second opening operative configuration (figure 4), in which it respectively closes or opens the fluidic connection between the mouths 7 and 8, so as to prevent or allow the delivery of the gas fuel to the cylinder 5; and
- an electromagnet 11 (figures 2, 3 and 4) to selectively operate the anchor 10.

More in detail, the inlet and outlet mouths 7, 8 project on opposite sides of the casing 6 and extend along one single axis A. Alternatively, the inlet and outlet mouths 7, 8 could extend along parallel and non-aligned axes.

In the example shown, the inlet and outlet mouths 7, 8 are further connected to the pressure reduction device 4 and to the cylinder 5, respectively, by means of fluidic connection means. In particular, the fluidic connection means comprise an inlet pipe 12, which is interposed between the pressure reduction device 4 and the inlet mouth 7, and an outlet pipe 13, which is interposed between the outlet mouth 8 and the cylinder 5. Therefore, the outlet pipe 13 defines an intake pipe for the cylinder 5.

With particular reference to figures 3 and 4, the inlet mouth 7 has an end opening 14, which faces the inside of the casing 6, and an end opening 15, which is axially opposite to the opening 14. The opening 15 is fluidically connected to the pressure reduction reduction device 4 by means of the inlet pipe 12 (figure 1).

The outlet mouth 8, just like the inlet mouth 7, has an end opening 16 (figures 3 and 4), which faces the inside of the casing 6, and an end opening 17 (figures 1, 3 and 4), which is axially opposite to the opening 16 and is fluidically connected to the cylinder 5. In particular, the cylinder 5 and the opening 16 are fluidically connected to one another by means of the outlet pipe 13 (figure 1).

Thanks the casing 6 being hollow, the opening 14 of the inlet mouth 7 and the opening 16 of the outlet mouth 8 are open towards a housing compartment 18 for the anchor 10 and the electromagnet 11 (figures 3 and 4); therefore, the outlet mouth 8 is selectively traversable by the fuel coming from the inlet mouth 7.

With reference to the figures from 2 to 4, the anchor 10 is housed inside the compartment 18 of the casing 6 so as to be interposed, along the axis A, between the inlet and outlet mouths 7, 8 and, more precisely, between the openings 14 and 16. More in detail, the anchor 10 is interposed, along the axis A, between the electromagnet 11 and the opening 16 of the outlet mouth 8.

In the example shown, the anchor 10 comprises a plate 20 made of ferromagnetic material, which extends orthogonally to the axis A in the second operative configuration and has an oblong shape in a direction X, which is also orthogonal to the axis A in the aforesaid second operative configuration.

The plate 20 has opposite surfaces 21, 22 (figures 2 to 4), which respectively face the electromagnet 6 and the opening 16 of the outlet mouth 8.

The anchor 10 is further provided with a shutter disc 23, which is made of an elastomer material and is fixed on a side portion 24 of the plate 20, on the side of the surface 22 in a position facing the opening 16 of the outlet pipe 8.

With reference to figures 3 and 4, the injector 1 further comprises a cylindrical spiral spring 25 extending parallel to the axis A and in a position spaced apart from the latter.

The spring 25 has an axial end 26, which cooperates with the casing 6, and an end 27, which is opposite to the end 26 and cooperates with a bar 28 (figures 2, 3 and 4) made of an elastically yielding material. The bar 28 extends along a direction that is substantially parallel to the lying plane of the plate 20 and orthogonal to the axis A.

The bar 28 cooperates, on the side opposite to the spring 25, with the surface 22 of the plate 20. Moore precisely, the bar 28 cooperates with a side portion 30 of the plate 20 opposite to the side portion 24 carrying the shutter disc 23.

The spring 25 is designed so as to pre-load the anchor 10 towards the first closing operative configuration (figure 3), in which the plate 20 is slightly inclined with respect to the axis A and the shutter disc 23 engages the opening 16 of the outlet mouth 8 in a gas-tight manner. By so doing, the shutter disc 23 forbids the fluidic connection between the outlet mouth 8 and the inlet mouth 7 and, consequently, prevents the delivery of the gas fuel to the cylinder 5.

The anchor 10 is further fitted inside the compartment 18 of the casing 8 so as to rotate around an axis B (figures 3 and 4), which is parallel to the direction of extension of the bar 28 and not aligned with respect to the latter both in a direction parallel to the axis A and parallely to the direction X of extension of the plate 20.

More precisely, in the example shown, the anchor 10, by means of its own surface 21, rests on one of the delimiting walls of the compartment 18 by means of a cylindrical pin 31 made of a stiff material, for example a metal material; the anchor 10 rests on the pin 31 along a contact line defining the axis B. The pin 31 extends parallely to the bar 28 and in a position interposed between the shutter disc 23 and the bar 28 parallely to the direction X. The pin 31 is further arranged in a position close to the bar 28.

With reference - again - to figures 3 and 4, the electromagnet 11 comprises a core 32 made of a magnetic material and a coil 33, which is wound on the core 32 and can be electrically powered in a selective manner. In particular, the coil 33 can be electrically powered by means of a plurality of electric terminals and a control unit (not shown), so as to generate a magnetic field on the anchor 10 opposite to the force exerted by the spring 25 upon the anchor 10 itself.

The electromagnet 11 is housed inside a cup-shaped section 35 extending along an axis that is parallel to the axis A.

In particular, the section 35 comprises a axial end bottom wall 36, which has a rectangular shape and an extension orthogonal to the axis A, and is crossed by an end portion of the inlet mouth 7 adjacent to the opening 14. The section 35 further comprises a prismatic side wall 37, which projects cantilevered from the bottom wall 36 towards the outlet mouth 8 and has respective faces that are parallel to the axis A and extend around the latter.

The section 35 is preferably made of a material having a high magnetic flux conveying ability, such as for example a ferrous material with low carbon content.

When the coil 33 of the electromagnet 1 is flown through by an electric current, it generates a magnetic field, which is amplified by the core 32. Said magnetic field determines, in a known manner, a magnetic force on the anchor 10, which is substantially oriented parallel to the axis A.

In particular, the application points of the magnetic force and of the returning force of the spring 25 on the plate 20 of the anchor 10 are distinct from one another and are both spaced apart from the axis B. Therefore, the spring 25 and the circulation of current in the coil 33 generate two opposite rotation torques on the plate 20 of the anchor 10. The electromagnet 11 is powered by the control unit so as to generate a rotation torque on the plate 20 of the anchor 10, which has an opposite direction and a greater modulus compared to the rotation torque generated by the spring 25 on the plate 20.

The resultant of the aforesaid torques determines the rotation of the anchor 10 around the axis B, in particular shown in figures 3 and 4 in a counterclockwise direction. At the end of this rotation, the anchor 10 is arranged in the second opening operative configuration (figure 4), in which it keeps the shutter disc 23 detached from the opening 16 of the outlet mouth 8, so as to allow the fuel entering the casing 6 through the inlet mouth 7 to flow into the outlet mouth 8 and, from there, towards the cylinder 5.

By so doing, the outlet mouth 8 and the inlet mouth 7 are fluidically connected to one another and the fuel can cross the casing 6, the outlet mouth 8, the outlet pipe 13 and reach the cylinder 5 of the engine.

As you can clearly see in figures 1 to 4, the spring 25 has an axial pre-load that can be adjusted so as to vary the magnetic force needed to the move the plate 20 of the anchor 10 from the first closing operative configuration to the second opening operative configuration; by so doing, another aspect turns out to be variable, which is the time needed to move the plate 20 back from the second opening operative configuration to the first closing operative configuration, once the control unit has stopped powering the electromagnet 11 by means of the electric terminals.

More in particular (figures 3 and 4), the end 26 of the spring 25 cooperates with a screw adjustment element 34, which is coupled in a cavity 34a of the casing 6. In particular, the adjustment element 34 and the cavity 34a are coaxial to one another and coaxial to the spring 25.

The adjustment element 34 engages, with an outer thread of its own, a corresponding thread obtained in the cavity 34a.

The adjustment element 34 has an axial end opposite to the end 26 of the spring 25, which is adapted to be engaged, in use, by a suitable wrench, so as to vary the relative axial position between the threads of the adjustment element 34 and of the cavity 34a and, consequently, the axial pre-load of the spring 25.

Advantageously, the injector 1 further comprises:
- a magnetic flux conveying element 38, preferably plate-shaped, which is arranged inside the compartment 18 in a position interposed between the electromagnet 11 and the anchor 10 and is separated from the core 32 by an air gap; and
- a spacer 39 interposed between the side portion 24 of the anchor 10 and the magnetic flux conveying element 38, so as to maintain an air gap between them with the exception of the action area of the spacer 39 itself.

In particular, as you can see in figure 4, the magnetic flux conveying element 38 substantially extends parallel to the anchor 10 in the second opening operative configuration.

The anchor 10 (figures 2 to 8) further comprises a preferably tubular shank 40, which projects towards the core 32 through a through opening 41 of the magnetic flux conveying element 38 and is held, by the pin 31, by the spacer 39 and by the magnetic flux conveying element 38, in a position facing the core 32 and separated from the latter by an air gap in the operative configuration of the anchor 10.

Basically, the spacer 39 and the pin 31 define, as a whole, positioning means for the anchor 10 inside the casing 6, which are configured to keep, in the second operative configuration of the anchor 10, the portion thereof directly facing the core 32, namely the shank 40, separated from the aforesaid core 32 by an air gap

As you can see in figures 3 and 4, the pin 31 engages a through opening 31a of the magnetic flux conveying element 38 and has a size in a direction parallel to the axis A, namely a diameter, that is greater than the thickness of the magnetic flux conveying element 38 in a direction parallel to the axis A. This feature, together with the presence of the spacer 39, allows a predetermined air gap to be maintained between the anchor 10 and the magnetic flux conveying element 38 in the second operative configuration of the anchor 10.

The magnetic flux conveying element 38 is preferably made of a ferrous material with low carbon content.

In the example shown, the magnetic flux conveying element 38 rests on the free end edge of the side wall 37 of the section 35, opposite to the bottom wall 36; the side wall 37 advantageously has a height, in a direction parallel to the axis A, that is greater than the height, in the same direction, of the core 32, so as to ensure the presence of an air gap between the core 32 and the magnetic flux conveying element 38.

In the embodiment shown in figures 3 to 6, the spacer 39 consists of a projection 42, which is carried by the plate and protrudes from the surface 21 towards the magnetic flux conveying element 38. Preferably, the projection 48 is made as one single piece, hence of an elastomer material, together with the shutter disc 23, to which it is connected by means of a joining strip 43 extending around the end corner of the plate 20 delimiting the side portion 24. The projection 42 has a prismatic shape.

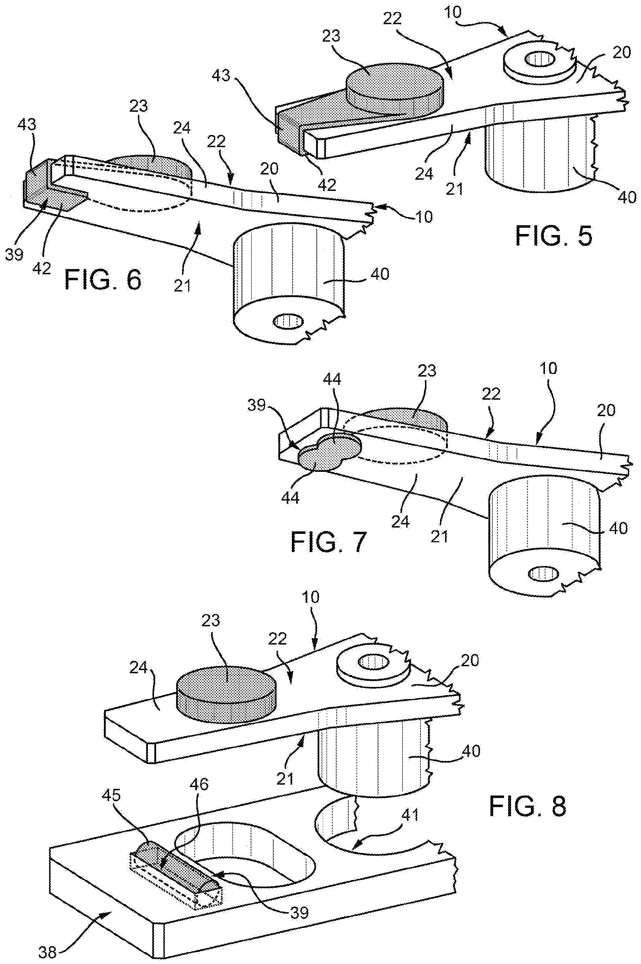

The variant of figure 7 shows a spacer 39 similar to the spacer 39 of figures 3 to 6, but different from the latter because of the sole fact that the prismatic projection 42 is replaced by two raised discs 44 besides one another and joined together, so that there is no joining strip between the shutter disc 23 and the discs 44 themselves.

The variant of figure 8 shows a spacer 39 with a concept different from the ones of figures 3 to 7; in this case, the spacer 39 is carried by the magnetic flux conveying element 38 and preferably consists of a cylindrical bar 45, in particular made of an elastomer material, which is housed in cavity 46 of the magnetic flux conveying element 38 itself, extends parallely to the pin 31 and to the bar 28 and projects towards the anchor 10.

As you can see in figure 1, the injector 1, in use, is fitted and positioned inside the engine compartment (not shown) of the automotive vehicle exclusively through the coupling between the inlet and outlet mouths 7, 8 and the relative inlet 12 and outlet pipes 13, both made of a flexible material, so as to be easily bent according to a desired bend radius.

In use, the liquefied gas contained in the tank 3 flows through the pressure reduction device 4, where it is decompressed until it reaches the gaseous state.

The fuel gas, through the inlet pipe 12, reaches the inlet mouth 7 of the injector 1, which selectively permits or forbids the flow of the fuel gas through the outlet pipe 13 and the consequent injection into the cylinder 5.

The operation of the injector 1 is described below starting from a condition in which the anchor 10 is in the first closing operative configuration (figure 3).

In this first operative configuration, the shutter disc 23 engages the opening 16 of the outlet mouth 8 in a gas-tight manner, thus preventing the gas led by the inlet pipe 12 into the casing 6 from flowing through the outlet pipe 13 and from reaching the cylinder 5.

The anchor 10 is loaded towards the first closing operative configuration of the spring 25 and of the bar 28, which act upon the side portion 30 of the plate 20.

Due to the action of an external control, for example the lowering of a pedal, the anchor 10 moves from the first closing operative configuration to the second opening operative configuration (figure 4).

More in detail, following the external control, the control unit powers the electric terminals and supplies the coil 33 with an electric current.

The electric current flowing through the coil 33 determines a magnetic field, whose intensity is amplified by the core 32.

The actions of the spring 25 and of the magnetic field of the coil 33 have application points on the plate 20 of the anchor 10 that are spaced apart from one another and spaced apart from the axis B.

Therefore, the plate 20 is subjected to two rotation torques around the axis B, one generated by the spring 25 and the other one generated by the coil 33, which, because of the current flowing through the coil 33, have a different modulus and opposite directions.

The resultant of the these torques determines the rotation of the anchor 10 around the axis B against the action of the spring 25 and in a counterclockwise direction.

The spring 25 is compressed and the shutter disc 23 disengages (figure 4) the opening 16, thus establishing a fluidic connection between the inlet mouth 7 and the outlet mouth 8.

Thus, the fuel gas contained inside the casing 6 can flow through the opening 16, the outlet mouth 8 and the outlet pipe 13 and be injected into the cylinder 15.

It should be pointed out that the magnetic flux generated by the electric current circulating in the coil 33 spreads through the core 32, the magnetic flux conveying element 38, the section 35 and the shank 40, so as to finally exert an attraction action upon the anchor 10.

When the control signal is deactivated, the control unit interrupts the circulation of electric current inside the coil 33 and, therefore, there is no more magnetic force acting upon the anchor 10.

Consequently, the anchor 10 moves back from the second opening operative configuration to the first closing operative configuration.

More in detail, the spring 25 stretches, thus determining the rotation, in a clockwise direction, of the anchor 10 around the axis B. This rotation stops when the shutter disc 23 strikes, in a gas-tight manner, against the opening 16 of the outlet mouth 8, thus preventing the delivery of the fuel gas to the outlet pipe 13 and to the cylinder 5.

The magnetic force needed to overcome the action of the spring 25 and the time needed to move the anchor 10 back from the second opening operative configuration to the first closing operative configuration are selectively varied by acting, with a suitable wrench, upon the screw 34, so as to change the pre-load of the spring 25.

More precisely, by acting upon the screw 34, you can change the relative axial position between the threads of the screw 34 and of the cavity 34a and, consequently, the pre-load of the spring 25.

The injector 1 according to the invention leads to evident advantages that can be obtained using it.

In particular, the injector 1 ensures the presence of an air gap between the anchor 10 and the core 32 in the second opening operative configuration. In the presence of oils or other impurities in the gas fuel, this allows manufacturers to avoid any adhesion between the anchor 10 and the core 32 and, as a consequence, possible delays in the closing of the anchor 10.

Therefore, the injector 1 is characterized by very precise delivery times, regardless of the type of gas fuel used.

Furthermore, the presence of the magnetic flux conveying element 38, which is also separated from the core 32 and from the anchor 10 by respective air gaps, allows manufacturers to increase the attractive action of the magnetic field exerted upon the anchor 10 by the activation of the coil 33; this increase makes up for the probable reduction in the magnetic force of attraction exerted upon the anchor 10, due to the air gap between the latter and the core 32.

Finally, the injector 1 described herein can be subjected to changes and variants, which do not go beyond the scope of protection set forth in the appended claims.

## Claims

1. An injector (1) for a system (2) for feeding gas fuel to an internal combustion engine, comprising:
- a casing (6) having at least one inlet mouth (7) for the fuel and at least one outlet mouth (8) selectively traversable by the fuel coming from the inlet mouth (7) and fluidically connectable to a cylinder (5) of the engine;
- an anchor (10) housed inside the casing (6) between the inlet (7) and outlet (8) mouths and comprising a shutter (23) adapted to cooperate selectively with one (8) of said inlet (7) and outlet (8) mouths to prevent the fluidic connection between the same;
- elastic means (25) acting on a first portion (30) of the anchor (10) spaced from the shutter (23); and
- an electromagnet (11) selectively activated to generate a magnetic field on the anchor (10) opposite to the force generated by the elastic means (25) on the anchor (10) itself; said electromagnet (11) comprising a core (32) made of magnetic material and a coil wound (33) on the core (32) and powered electrically in a selective manner;
said anchor (10) being movable between a first operative configuration, in which the shutter (23) engages said one (8) of said inlet (7) and outlet (8) mouths to prevent delivery of the fuel to the cylinder (5), and a second operative configuration, in which the shutter (23) leaves open said one (8) of said inlet (7) and outlet (8) mouths so as to allow delivery of the fuel inside the cylinder (5);
said elastic means (25) cooperating with the anchor (10) to keep the same in one of said first and second operative configuration and said electromagnet (11) being selectively activated to generate a force of attraction on said anchor (10) and move the same in another of said first and second operative configurations against the action of the elastic means (25);
**characterized by** further comprising:
- positioning means (31, 39) of the anchor (10) inside the casing (6) defining, in said other of said first and second operative configurations, an air gap between the core (32) and a second portion (40) of said anchor (10) facing the core (32) itself and distinct from said first portion (30); and- a magnetic flux conveying element (38), in particular made of a ferrous material with low carbon content, interposed between the core (32) and the anchor (10) ;
said positioning means comprising at least one spacer (39) interposed between the magnetic flux conveying element (38) and the anchor (10), in a remote position with respect to said second portion (40); said spacer (39) being configured to maintain an air gap between the anchor (10) and the magnetic flux conveying element (38) with the exception of the action area of the spacer (39) itself; said magnetic flux conveying element (38) being fixed inside the casing (6) in a position in which it is separated from the core (32) by means of an air gap.

2. The injector according to claim 1, wherein the anchor (10) comprises a shank (40) projecting towards the core (32) through an opening (41) of the magnetic flux conveying element (38) and defining said second portion.

3. The injector according to claim 1 or 2, wherein said positioning means further comprise a support (31) for said anchor (10) arranged in a remote position with respect to said spacer (39), interposed between an inner surface of the casing (6) and the anchor (10) itself and extending through a through opening (31a) of said magnetic flux conveying element (38).

4. The injector according to claim 3, wherein said support (31) defines a fulcrum for said anchor (10) interposed between the action area of the elastic means (25) and the shutter (23) and adapted to allow the rotation of the anchor (10) itself to define said first and said second operative configuration.

5. The injector according to any one of claims from 1 to 4, wherein said spacer (39) comprises one or more raised elements (42, 44) carried by the anchor (10) and adapted to be arranged on the magnetic flux conveying element (38) in said other of said first and second operative configurations.

6. The injector according to any one of claims from 1 to 4, wherein said spacer (39) is carried by said magnetic flux conveying element (38), projecting cantilevered from the magnetic flux conveying element (38) itself and is adapted to define a support for said anchor (10) in said other of said first and second operative configurations.

7. The injector according to any of the preceding claims, wherein said elastic means (25) cooperate with the anchor (10) to keep it in said first operative configuration and wherein said electromagnet (11) is selectively activable to move said anchor (10) in said second operative configuration.

8. The injector according to any of the preceding claims, wherein, in the first operative configuration of the anchor (10), the shutter (23) engages said outlet mouth (8).

9. The injector according to any one of claims from 1 to 8, wherein said electromagnet (11) is housed inside a cup-shaped section (35) made of a magnetic flux conveying material; wherein said section (35) comprises a bottom wall (36) and a side wall (37) projecting cantilevered from the perimeter of said bottom wall (36) ; and wherein said magnetic flux conveying element (38) rests on a free end edge of the side wall (37) of said section (35) opposite to said bottom wall (36).

## Patentansprüche

1. Injektor (1) für ein System (2) zum Zuführen von Gaskraftstoff zu einem Verbrennungsmotor, der aufweist:
ein Gehäuse (6), das mindestens eine Einlassöffnung (7) für den Kraftstoff und mindestens eine Auslassöffnung (8), die durch den Kraftstoff, der von der Einlassöffnung (7) kommt, selektiv passierbar und mit einem Zylinder (5) des Motors fluidisch verbindbar ist,
einen Anker (10), der im Inneren des Gehäuses (6) zwischen der Einlass- (7) und der Auslassöffnung (8) untergebracht ist und einen Verschluss (23) aufweist, der so ausgebildet ist, dass er mit einer (8) der Öffnungen, Einlass- (7) und Auslassöffnung (8), selektiv zusammenwirkt, um die fluidische Verbindung zwischen denselben zu unterbinden,
ein elastisches Mittel (25), das auf einen ersten Abschnitt (30) des Ankers (10) einwirkt, der vom Verschluss (23) beabstandet ist, und
einen Elektromagneten (11), der selektiv aktiviert wird, um ein magnetisches Feld an dem Anker (10) zu generieren, das zu der Kraft, die durch das elastische Mittel (25) an dem Anker (10) selbst generiert wird, entgegengesetzt ist, wobei der Elektromagnet (11) einen Kern (32), der aus einem magnetischen Material hergestellt ist, und eine Spule (33), die auf den Kern (32) gewickelt ist, aufweist und in einer selektiven Art und Weise elektrisch betrieben wird,
wobei der Anker (10) zwischen einer ersten Betriebskonfiguration, bei der der Verschluss (23) mit einer (8) der Öffnungen, Einlass- (7) und Auslassöffnung (8), in Wirkverbindung steht, um eine Lieferung des Kraftstoffs zu dem Zylinder (5) zu unterbinden, und einer zweiten Betriebskonfiguration, bei der der Verschluss (23) eine (8) der Öffnungen, Einlass- (7) und Auslassöffnung (8), offen lässt, um eine Lieferung des Kraftstoffs ins Innere des Zylinders (5) zu erlauben, bewegbar ist,
wobei das elastische Mittel (25) mit dem Anker (10) zusammenwirkt, um denselben in einer der Konfigurationen, erste und zweite Betriebskonfiguration, zu halten und der Elektromagnet (11) selektiv aktiviert wird, um eine Anziehungskraft auf den Anker (10) zu generieren und denselben in eine andere der Konfigurationen, erste und zweite Betriebskonfiguration, entgegen der Wirkung des elastischen Mittels (25) zu bewegen,
**dadurch gekennzeichnet, dass** er ferner aufweist:
ein Positioniermittel (31, 39) des Ankers (10) im Inneren des Gehäuses (6), das in der anderen der Konfigurationen, erste und zweite Betriebskonfiguration, einen Luftspalt zwischen dem Kern (32) und einem zweiten Abschnitt (40) des Ankers (10), der dem Kern (32) selbst gegenüberliegt und zu dem ersten Abschnitt (30) unterschiedlich ist, definiert, und ein Element (38) zum Transport des magnetischen Flusses, das insbesondere aus einem eisenhaltigen Material mit niedrigem Kohlenstoffgehalt hergestellt ist, das zwischen dem Kern (32) und dem Anker (10) angeordnet ist,
wobei das Positioniermittel mindestens einen Abstandshalter (39) aufweist, der zwischen dem Element (38) zum Transport des magnetischen Flusses und dem Anker (10) an einer entfernten Position mit Bezug auf den zweiten Abschnitt (40) angeordnet ist, wobei der Abstandshalter (39) so konfiguriert ist, dass er einen Luftspalt zwischen dem Anker (10) und dem Element (38) zum Transport des magnetischen Flusses mit Ausnahme des Handlungsbereichs des Abstandshalters (39) selbst beibehält, wobei das Element (38) zum Transport des magnetischen Flusses im Inneren des Gehäuses (6) an einer Position fixiert ist, an der es vom Kern (32) über einen Luftspalt separiert ist.

2. Injektor gemäß Anspruch 1, wobei der Anker (10) einen Schaft (40) aufweist, der in Richtung des Kerns (32) durch eine Öffnung (41) des Elements (38) zum Transport des magnetischen Flusses hervorsteht und den zweiten Abschnitt definiert.

3. Injektor gemäß Anspruch 1 oder 2, wobei das Positioniermittel ferner eine Halterung (31) für den Anker (10) aufweist, die an einer entfernten Position mit Bezug auf den Abstandshalter (39) angeordnet ist, die zwischen einer inneren Fläche des Gehäuses (6) und dem Anker (10) selbst angeordnet ist und sich durch eine Durchgangsöffnung (31a) des Elements (38) zum Transport des magnetischen Flusses ausbreitet.

4. Injektor gemäß Anspruch 3, wobei die Halterung (31) einen Drehpunkt für den Anker (10) definiert, der zwischen dem Handlungsbereich des elastischen Mittels (25) und dem Verschluss (23) angeordnet und so ausgebildet ist, dass er die Rotation des Ankers (10) selbst erlaubt, um die erste und die zweite Betriebskonfiguration zu definieren.

5. Injektor gemäß einem der Ansprüche 1 bis 4, wobei der Abstandshalter (39) ein oder mehrere erhöhte Elemente (42, 44) aufweist, die durch den Anker (10) getragen werden und so ausgebildet sind, dass sie auf dem Element (38) zum Transport des magnetischen Flusses in der anderen der Konfigurationen, erste und zweite Betriebskonfiguration, angeordnet sind.

6. Injektor gemäß einem der Ansprüche 1 bis 4, wobei der Abstandshalter (39) durch das Element (38) zum Transport des magnetischen Flusses getragen wird, von dem Element (38) zum Transport des magnetischen Flusses selbst auskragend hervorsteht und so ausgebildet ist, dass er eine Halterung für den Anker (10) in der anderen der Konfigurationen, erste und zweite Betriebskonfiguration, definiert.

7. Injektor gemäß einem der vorhergehenden Ansprüche, wobei das elastische Mittel (25) mit dem Anker (10) zusammenwirkt, um ihn in der ersten Betriebskonfiguration zu halten, und wobei der Elektromagnet (11) selektiv aktivierbar ist, um den Anker (10) in die zweite Betriebskonfiguration zu bewegen.

8. Injektor gemäß einem der vorhergehenden Ansprüche, wobei der Verschluss (23) in der ersten Betriebskonfiguration des Ankers (10) mit der Auslassöffnung (8) in Wirkverbindung steht.

9. Injektor gemäß einem der Ansprüche 1 bis 8, wobei der Elektromagnet (11) im Inneren eines becherförmigen Abschnitts (35) untergebracht ist, der aus einem Material zum Transport des magnetischen Flusses hergestellt ist, wobei der Abschnitt (35) eine Bodenwand (36) und eine Seitenwand (37), die vom Umfang der Bodenwand (36) auskragend hervorsteht, aufweist, und wobei das Element (38) zum Transport des magnetischen Flusses auf einer freien Endkante der Seitenwand (37) des Abschnitts (35), die zu der Bodenwand (36) entgegengesetzt ist, aufliegt.

## Revendications

1. Injecteur (1) pour un système (2) destiné à alimenter en carburant gazeux un moteur à combustion interne, comprenant :
- un carter (6) ayant au moins un orifice d'entrée (7) pour le carburant et au moins un orifice de sortie (8) traversable sélectivement par le carburant provenant de l'orifice d'entrée (7) et raccordable fluidiquement à un cylindre (5) du moteur ;
- un ancrage (10) logé à l'intérieur du carter (6) entre les orifices d'entrée (7) et de sortie (8) et comprenant un obturateur (23) adapté pour coopérer sélectivement avec l'un (8) desdits orifices d'entrée (7) et de sortie (8) pour empêcher le raccordement fluidique entre ceux-ci ;
- des moyens élastiques (25) agissant sur une première portion (30) de l'ancrage (10) espacée de l'obturateur (23) ; et
- un électroaimant (11) activé sélectivement pour générer un champ magnétique sur l'ancrage (10) opposé à la force générée par les moyens élastiques (25) sur l'ancrage (10) lui-même ; ledit électroaimant (11) comprenant un noyau (32) réalisé en matériau magnétique et une bobine enroulée (33) sur le noyau (32) et alimentée électriquement de manière sélective ;
ledit ancrage (10) étant mobile entre une première configuration opérationnelle, dans laquelle l'obturateur (23) s'engage avec ledit un (8) desdits orifices d'entrée (7) et de sortie (8) pour empêcher une distribution du carburant au cylindre (5), et une deuxième configuration opérationnelle, dans laquelle l'obturateur (23) laisse ouvert ledit un (8) desdits orifices d'entrée (7) et de sortie (8) de façon à permettre une distribution du carburant à l'intérieur du cylindre (5) ;
lesdits moyens élastiques (25) coopérant avec l'ancrage (10) pour garder celui-ci dans l'une desdites première et deuxième configurations opérationnelles et ledit électroaimant (11) étant activé sélectivement pour générer une force d'attraction sur ledit ancrage (10) et déplacer celui-ci dans l'autre desdites première et deuxième configurations opérationnelles contre l'action des moyens élastiques (25) ;
**caractérisé en ce qu'**il comprend en outre :
- des moyens de positionnement (31, 39) de l'ancrage (10) à l'intérieur du carter (6) définissant, dans ladite autre desdites première et deuxième configurations opérationnelles, un entrefer entre le noyau (32) et une deuxième portion (40) dudit ancrage (10) en regard du noyau (32) lui-même et distincte de ladite première portion (30) ; et un élément d'acheminement de flux magnétique (38), réalisé notamment en un matériau ferreux à faible teneur en carbone, interposé entre le noyau (32) et l'ancrage (10) ;
lesdits moyens de positionnement comprenant au moins une entretoise (39) interposée entre l'élément d'acheminement de flux magnétique (38) et l'ancrage (10), dans une position éloignée par rapport à ladite deuxième portion (40) ; ladite entretoise (39) étant configurée pour maintenir un entrefer entre l'ancrage (10) et l'élément d'acheminement de flux magnétique (38) à l'exception de la zone d'action de l'entretoise (39) elle-même ; ledit élément d'acheminement de flux magnétique (38) étant fixé à l'intérieur du carter (6) dans une position dans laquelle il est séparé du noyau (32) au moyen d'un entrefer.

2. Injecteur selon la revendication 1, dans lequel l'ancrage (10) comprend une tige (40) faisant saillie vers le noyau (32) à travers une ouverture (41) de l'élément d'acheminement de flux magnétique (38) et définissant ladite deuxième portion.

3. Injecteur selon la revendication 1 ou 2, dans lequel lesdits moyens de positionnement comprennent en outre un support (31) pour ledit ancrage (10) agencé dans une position éloignée par rapport à ladite entretoise (39), interposé entre une surface intérieure du carter (6) et l'ancrage (10) lui-même et s'étendant à travers une ouverture traversante (31a) dudit élément d'acheminement de flux magnétique (38).

4. Injecteur selon la revendication 3, dans lequel ledit support (31) définit un point d'appui pour ledit ancrage (10) interposé entre la zone d'action du moyen élastique (25) et l'obturateur (23) et adapté pour permettre la rotation de l'ancrage (10) lui-même pour définir ladite première et ladite deuxième configuration opérationnelle.

5. Injecteur selon l'une quelconque des revendications 1 à 4, dans lequel ladite entretoise (39) comprend un ou plusieurs éléments surélevés (42, 44) portés par l'ancrage (10) et adaptés pour être agencés sur l'élément d'acheminement de flux magnétique (38) dans ladite autre desdites première et deuxième configurations opérationnelles.

6. Injecteur selon l'une quelconque des revendications 1 à 4, dans lequel ladite entretoise (39) est portée par ledit élément d'acheminement de flux magnétique (38), saillant en porte-à-faux de l'élément d'acheminement de flux magnétique (38) lui-même et est adaptée pour définir un support pour ledit ancrage (10) dans ladite autre desdites première et deuxième configurations opérationnelles.

7. Injecteur selon l'une quelconque des revendications précédentes, dans lequel lesdits moyens élastiques (25) coopèrent avec l'ancrage (10) pour le garder dans ladite première configuration opérationnelle et dans lequel ledit électroaimant (11) est activable sélectivement pour déplacer ledit ancrage (10) dans ladite deuxième configuration opérationnelle.

8. Injecteur selon l'une quelconque des revendications précédentes, dans lequel, dans la première configuration opérationnelle de l'ancrage (10), l'obturateur (23) s'engage avec ledit orifice de sortie (8).

9. Injecteur selon l'une quelconque des revendications 1 à 8, dans lequel ledit électroaimant (11) est logé à l'intérieur d'une section en forme de coupelle (35) réalisée en un matériau d'acheminement de flux magnétique ; dans lequel ladite section (35) comprend une paroi de fond (36) et une paroi latérale (37) saillant en porte-à-faux du périmètre de ladite paroi de fond (36) ; et dans lequel ledit élément d'acheminement de flux magnétique (38) repose sur un bord d'extrémité libre de la paroi latérale (37) de ladite section (35) opposée à ladite paroi de fond (36).
